# EUROPÄISCHE PATENTSCHRIFT

(11) **EP 0 708 907 B1**
(45) Veröffentlichungstag und Bekanntmachung des Hinweises auf die Patenterteilung: **08.01.1997**
(21) Anmeldenummer: 94912476.2
(22) Anmeldetag: 19.04.1994
(51) Int. Cl.: F28D 20/00

(54) **WÄRMESPEICHER, INSBESONDERE LATENTWÄRMESPEICHER**
HEAT STORE, ESPECIALLY LATENT HEAT STORE
ACCUMULATEUR DE CHALEUR, EN PARTICULIER ACCUMULATEUR DE CHALEUR LATENTE

(30) Priorität: 20.07.1993 DE 4324252
(43) Veröffentlichungstag der Anmeldung: 01.05.1996
(73) Patentinhaber: LÄNGERER & REICH GmbH & Co., D-70794 Filderstadt (DE)
(72) Erfinder: STRÄHLE, Roland, D-72669 Unterensingen (DE)
(74) Vertreter: Kratzsch, Volkhard, Dipl.-Ing.
(86) Internationale Anmeldenummer: DE9400441
(87) Internationale Veröffentlichungsnummer: WO9503519

(56) Entgegenhaltungen:
- DE-A- 4 007 004
- DE-C- 4 224 873

## Beschreibung

Die Erfindung bezieht sich auf einen Wärmespeicher, insbesondere Latentwärmespeicher, der im Oberbegriff des Anspruchs 1 genannten Art.

Bei einem bekannten Wärmespeicher dieser Art (DE-OS 40 07 004) bestehen die Leitungsabschnitte, die durch den Isolationsraum geführt sind, aus Kunststoff, weil dessen Wärmeleitfähigkeit geringer ist als die von metallischen Leitungen. Als metallische Leitungen können z.B. durchgängige, einstückige Aluminiumrohre zum Vergleich herangezogen werden. Die Gestaltung der Leitungsabschnitte in Kunststoff hat vielfältige Nachteile. Zum einen ist keine dauerhafte Temperaturfestigkeit insbesondere dann gewährleistet, wenn das wärmetransportierende Medium im Betrieb hohe Temperaturen hat. Von Nachteil ist ferner, daß sich aus Kunststoff bestehende Leitungsabschnitte überhaupt nicht oder nur mit großem Aufwand und zweifelhaftem Ergebnis dicht, vorzugsweise vakuumdicht, an der Innenhülle befestigen lassen und dort, wo diese Leitungsabschnitte die Außenhülle passieren, an der Außenhülle befestigen lassen. Bei vakuumisolierten Wärmespeichern muß das Material der Leitungsabschnitte dauerhaft diffusionsdicht, also für Vakuum geeignet, sein. Solchen Anforderungen vermag Kunststoff nicht dauerhauft zu genügen. Auch kann Kunststoff den herrschenden mechanischen Beanspruchungen, z.B. Schwingungsbelastungen, auf Dauer nicht genügen.

Der Erfindung liegt die Aufgabe zugrunde, einen Wärmespeicher, insbesondere Latentwärmespeicher, der im Oberbegriff des Anspruchs 1 genannten Art zu schaffen, bei dem die durch die Zufluß- und Abflußleitungen verursachten Wärmeverluste in möglichst einfacher Weise reduziert werden können bei möglichst kostengünstiger Herstellung des Wärmespeichers.

Die Aufgabe ist bei einem Wärmespeicher, insbesondere Latentwärmespeicher, der eingangs genannten Art gemäß der Erfindung durch die Merkmale im Kennzeichnungsteil des Anspruchs 1 gelöst. Auf diese Weise lassen sich im Bereich der Leitungsabschnitte die Wärmeverluste aufgrund geringer Wärmeleitfähigkeit reduzieren, wobei der metallische Werkstoff selbst vakuumdicht ist und zugleich in einfacher Weise eine Schweißverbindung oder Lötverbindung möglich macht und somit eine kostengünstige Herstellung des Wärmespeichers. Von Vorteil ist ferner, daß entsprechende metallische Leitungsabschnitte auch hohen Temperaturen des wärmetransportierenden Mediums und hohen mechanischen Beanspruchungen dauerhaft standhalten und dauerhafte vakuumdichte Verbindungen ermöglichen.

Weitere vorteilhafte Erfindungsmerkmale und Ausgestaltungen ergeben sich aus den Ansprüchen 2 bis 15. Insbesondere dann, wenn die Komponenten des Wärmespeichers aus Aluminium bestehen und die an jedem Endbereich jedes Leitungsabschnittes vorhandenen Anschlußhülsen ebenfalls aus Aluminium bestehen, ist in einfacher Weise eine Aluminium/Aluminium-Schweißverbindung oder Lötverbindung zwischen den Leitungen, insbesondere deren endseitigen Anschlußhülsen, und der Innenhülle, z.B. einem dortigen Sammelkasten, sowie der Außenhülle möglich. Hierbei ist eine erhebliche Reduzierung der Wärmeverluste erreichbar. Von Vorteil ist ferner, daß aufgrund der durch das Material der Leitungsabschnitte erreichten Reduzierung der Wärmeverluste eine freie Gestaltung der Leitungen ermöglicht ist.

Weitere Einzelheiten und Vorteile der Erfindung ergeben sich aus der nachfolgenden Beschreibung.

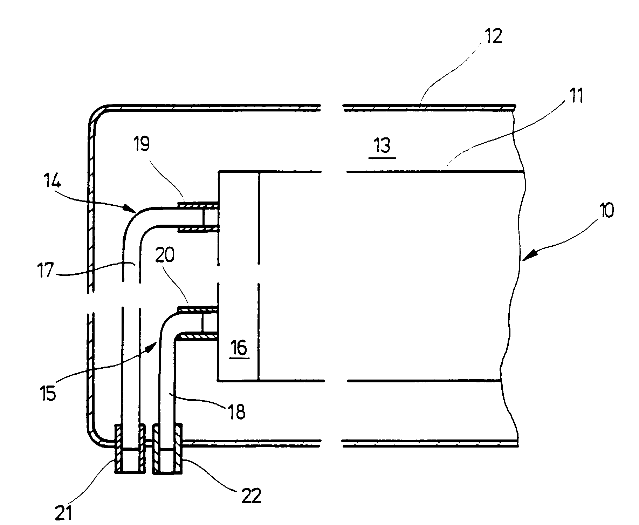

Der vollständige Wortlaut der Ansprüche ist vorstehend allein zur Vermeidung unnnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Die Zeichnung zeigt eine schematische, teilweise geschnittene Seitenansicht eines Teils eines Wärmespeichers.

In der Zeichnung ist schematisch ein Teil eines Wärmespeichers 10, insbesondere eines Latentwärmespeichers, gezeigt, der im Inneren einen hier nicht besonders herausgestellten Speicherkern aufweist. Der Speicherkern bildet die der Wärmespeicherung dienende Einrichtung und ist von einer nur schematisch angedeuteten Innenhülle 11 umschlossen. Die Innenhülle 11 besteht aus Metall, mit Vorzug z.B. aus Aluminium. Zum Speicherkern gehört mindestens ein Sammelkasten 16, der entweder in den Speicherkern integriert oder ein separates, mit dem Speicherkern fest verbundenes Teil ist. Die Innenhülle 11 ist mit Abstand von einer Außenhülle 12 umgeben. Aufgrund des Abstandes ist zwischen der Innenhülle 11 und der Außenhülle 12 ein Isolationsraum 13 gebildet, der evakuiert sein kann und/oder geeignetes Isoliermaterial, z.B. Isolierpulver, enthalten kann.

Der Wärmespeicher 10 weist ferner zwei von außen durch den Isolationsraum 13 geführte Leitungen 14 und 15 auf, z.B. Rohrleitungen. Von diesen Leitungen dient eine Leitung als Zuflußleitung und die andere Leitung als Rückflußleitung für ein wärmetransportierendes Medium, beispielsweise Kühlwasser einer Brennkraftmaschine.

Die Leitungen 14 und 15 münden z.B. an einer zugewandten Stirnwand in den von der Innenhülle 11 gebildeten Innenbehälter, insbesondere in den Sammelkasten 16, wobei die Leitungen 14 und 15 mit der Innenhülle 11, insbesondere dem Sammelkasten 16, dicht und fest verbunden sind.

Bei herkömmlichen Wärmespeichern ähnlicher Art bestehen diese Leitungen 14 und 15 durchgängig aus Aluminium. Aufgrund der großen Wärmeleitfähigkeit fließt über derartige einstückige Aluminiumrohre sehr viel Verlustwärme aus dem Speicherkern nach außen ab. Es ergeben sich demgemäß große Wärmeverluste. Um diese zu reduzieren, wurde schon vorgeschlagen, die Abschnitte der Leitungen 14,15, die sich im Isolationsraum 13 erstrecken, aus Kunststoff zu bilden, weil die Wärmleitfähigkeit von Kunststoff geringer ist als diejenige metallischer Leitungen. Ein derartiges Material ist jedoch unbefriedigend. Es ist nicht für alle Temperaturbereiche, die das wärmetransportierende Medium durchläuft, ausreichend standfest. Vor allem ergeben sich Schwierigkeiten der festen und dichten, vorzugsweise vakuumdichten, Verbindung im Anschlußbereich zur Innenhülle 11, z.B. zum Sammelkasten 16, und auch dort, wo die Leitungsabschnitte aus dem Isolationsraum 13 herausgeführt und durch die Außenhülle 12 hindurchgeleitet werden.

Beim Wärmespeicher 10 weist jede Leitung 14, 15 einen Leitungsabschnitt 17 bzw. 18 aus einem Material mit reduzierter Wärmeleitfähigkeit auf, das hier aus einem entsprechenden Metall besteht und mit Vorzug schweißbar oder lötbar ist. Von besonderem Vorteil kann es sein, wenn die Leitungsabschnitte 17,18 aus Edelstahl bestehen, z.B. aus einem rost- und säurebeständigen Chrom-Nickel-legierten Stahl. Derart gestaltete Leitungsabschnitte 17,18 haben den Vorteil, daß aufgrund der geringen Wärmeleitfähigkeit dieses Metallsdie Wärmeverluste erheblich reduziert werden können. Dabei ist die Herstellung des Wärmespeichers 10 einfach und kostengünstig möglich.

Besonders vorteilhaft ist es, wenn jeder Leitungsabschnitt 17,18 an dem Endbereich, wo der Anschluß an die Innenhülle 11, z.B. den Sammelkasten 16, geschieht, mit einer Anschlußhülse 19 bzw. 20 versehen ist, über die der Leitungsabschnitt 17 bzw. 18 an der Innenhülle 11, z.B. deren Sammelkasten 16, befestigt ist.

Auch an dem Endbereich der Leitungsabschnitte 17,18, der aus der Außenhülle 12 herausführt, kann jeder Leitungsabschnitt 17,18 mit Vorteil mit einer Anschlußhülse 21 bzw. 22 versehen sein, über die der Leitungsabschnitt 17 bzw. 18 an der Außenhülle 12 befestigt ist. Jede Anschlußhülse 19 bis 22 besteht z.B. aus Aluminium. Sie ist mit dem jeweiligen Leitungsabschnitt 17,18 dicht, vorzugsweise vakuumdicht, verbunden, so daß eine sichere Trennung in bezug auf den evakuierten Isolationsraum 13 gewährleistet ist.

Ferner ist die jeweilige Anschlußhülse 19,20 mit der Innenhülle 11, z.B. dem Sammelkasten 16, ebenfalls dicht, vorzugsweise vakuumdicht, verbunden. In gleicher Weise ist die jeweilige Anschlußhülse 21,22 mit der Außenhülle 12 dicht, vorzugsweise vakuumdicht, verbunden. Es wird angestrebt, daß die Innenhülle 11, insbesondere der Sammelkasten 16 dieser, an den die Leitungen 14,15 angeschlossen sind, und/oder die Außenhülle 12 aus Aluminium gebildet sind, wobei der gesamte Wärmespeicher 10 ein fertiges Aluminiumgebilde darstellt. Hierbei ist es dann von besonderem Vorteil, daß auch die Anschlußhülsen 19 bis 22 aus Aluminium bestehen. Dadurch wird es möglich gemacht, daß die Anschlußhülsen 19,20 mit der Innenhülle 11 und die Anschlußhülsen 21,22 mit der Außenhülle 12 jeweils durch Schweißen oder durch Löten verbunden werden können. Diese Materialwahl hat Vorteile hinsichtlich des Gewichts und der Kosten und macht eine Aluminium/Aluminium-Schweißverbindung oder Lötverbindung auch mit den Leitungen 14 und 15 in einfacher Weise möglich.

Die Anschlußhülsen 19 bis 22, die am jeweiligen Endbereich des jeweiligen Leitungsabschnittes 17,18 vorgesehen sind, können aus eigenständigen Hülsen, z.B. Rohrstücken, bestehen, die am jeweiligen Leitungsabschnitt 17,18 durch Schweißen oder Löten befestigt sind. Als Schweißverbindung zwischen den aus Edelstahl bestehenden Leitungsabschnitten 17 und 18 und den Aluminiumhülsen 19 bis 22 kommt z.B. eine Diffusionsschweißverbindung in Frage, z.B. das Explosionsverfahren. Auf diese Weise lassen sich schnell und einfach auf ein jeweils vorgebogenes Edelstahlrohr als Leitungsabschnitt 17,18 im Bereich beider Enden die Anschlußhülsen 19 bis 22 aufbringen und dicht, insbesonere vakuumdicht, befestigen.

Bei einem anderen, nicht gezeigten Ausführungsbeispiel kann der jeweilige Leitungsabschnitt 17,18 aber auch durch Materialauftragung, z.B. durch Flammspritzen, von Aluminiummaterial mit der jeweiligen Anschlußhülse 19 bis 22 versehen werden.

Eine andere alternative Verbindung besteht in einer mechanischen Befestigung der jeweiligen Anschlußhülse 19 bis 22 am Leitungsabschnitt 17,18, wobei alle möglichen mechanischen Verbindungstechniken in Betracht kommen, z.B. eine Einwalzverbindung.

Bei einem anderen vorteilhaften Ausführungsbeispiel ist die jeweilige Leitung 14,15 aus einem doppelwandigen Rohrteil gebildet, z.B. einem Edelstahlinnenrohr, das außen von einem Aluminiummantel umkleidet ist. Hierbei ist der äußere Aluminiummantel bis auf die Belassung von Anschlußhülsen 19 bis 22 am jeweiligen Endbereich entfernt. Dieses Abarbeiten des äußeren Aluminiummantels kann z.B. auf mechanischem Wege erfolgen, beispielsweise durch spangebende Bearbeitung.

## Patentansprüche

1. Wärmespeicher, insbesondere Latentwärmespeicher, mit einer einen Speicherkern enthaltenden Innenhülle (11), mit einer die Innenhülle (11) unter Bildung eines Isolationsraumes (13) mit Abstand umgebenden Außenhülle (12) und mit zwei von außen durch den Isolationsraum (13) geführten Leitungen (14,15), deren eine als Zuflußleitung und deren andere als Rückflußleitung für ein wärmetransportierendes Medium dient, wobei jede Leitung (14, 15) einen im Isolationsraum (13) verlaufenden Leitungsabschnitt (17,18) aus einem Material mit reduzierter Wärmeleitfähigkeit aufweist,
**dadurch gekennzeichnet**,
daß der jeweilige Leitungsabschnitt (17,18) aus einem eine geringe Wärmeleitfähigkeit aufweisenden Metall gebildet ist.

2. Wärmespeicher nach Anspruch 1,
**dadurch gekennzeichnet**,
daß das Metall geringer Wärmeleitfähigkeit schweißbar oder lötbar ist.

3. Wärmespeicher nach Anspruch 1 oder 2,
**dadurch gekennzeichnet**,
daß das Metall ein Edelstahl ist, z.B. ein rost- und säurebeständiger Chrom-Nickel-legierter Stahl.

4. Wärmespeicher nach einem der Ansprüche 1 bis 3,
**dadurch gekennzeichnet**,
daß der jeweilige Leitungsabschnitt (17,18) an dem an die Innenhülle (11) anschließenden Endbereich mit einer Anschlußhülse (19,20) versehen ist, über die der Leitungsabschnitt (17,18) an der Innenhülle (11) befestigt ist.

5. Wärmespeicher nach einem der Ansprüche 1 bis 4,
**dadurch gekennzeichnet**, daß der jeweilige Leitungsabschnitt (17,18) an dem aus der Außenhülle (12) herausführenden Endbereich mit einer Anschlußhülse (21,22) versehen ist, über die der Leitungsabschnitt (17,18) an der Außenhülle (12) befestigt ist.

6. Wärmespeicher nach Anspruch 4 oder 5,
**dadurch gekennzeichnet**,
daß die jeweilige Anschlußhülse (19 bis 22) aus Aluminium gebildet ist.

7. Wärmespeicher nach einem der Ansprüche 4 bis 6,
insbesondere mit vakuumisoliertem Isolationsraum (13),
**dadurch gekennzeichnet**,
daß die jeweilige Anschlußhülse (19 bis 22) mit dem jeweiligen Leitungsabschnitt (17,18) dicht, vorzugsweise vakuumdicht, verbunden ist.

8. Wärmespeicher nach einem der Ansprüche 4 bis 7,
insbesondere mit vakuumisoliertem Isolationsraum (13),
**dadurch gekennzeichnet**,
daß die jeweilige Anschlußhülse (19,20) mit der Innenhülle (11) dicht, vorzugsweise vakuumdicht, verbunden ist.

9. Wärmespeicher nach einem der Ansprüche 4 bis 8,
insbesondere mit vakuumisoliertem Isolationsraum (13),
**dadurch gekennzeichnet**,
daß die jeweilige Anschlußhülse (21,22) mit der Außenhülle (12) dicht, vorzugsweise vakuumdicht, verbunden ist.

10. Wärmespeicher nach Anspruch 8 oder 9,
**dadurch gekennzeichnet**,
daß die jeweilige Anschlußhülse (19 bis 22) mit der Innenhülle (11) bzw. mit der Außenhülle (12) durch Schweißen oder Löten verbunden ist.

11. Wärmespeicher nach einem der Ansprüche 4 bis 10,
**dadurch gekennzeichnet**,
daß die jeweilige Anschlußhülse (19 bis 22) am jeweiligen Leitungsabschnitt (17,18) durch Schweißen, z.B. eine Diffusionsschweißverbindung, oder Löten befestigt ist.

12. Wärmespeicher nach einem der Ansprüche 1 bis 10,
**dadurch gekennzeichnet**,
daß der jeweilige Leitungsabschnitt (17,18) durch Materialauftragung, z.B. durch Flammspritzen, mit der jeweiligen Anschlußhülse (19 bis 22) versehen ist.

13. Wärmespeicher nach einem der Ansprüche 4 bis 10,
**dadurch gekennzeichnet**,
daß die jeweilige Anschlußhülse (19 bis 22) am jeweiligen Leitungsabschnitt (17,18) mechanisch befestigt ist, z.B. durch Einwalzen od.dgl.

14. Wärmespeicher nach einem der Ansprüche 1 bis 10,
**dadurch gekennzeichnet**,
daß die jeweilige Leitung (14,15) aus einem doppelwandigen Rohrteil gebildet ist, dessen äußerer Aluminiummantel bis auf die Belassung von Anschlußhülsen (19 bis 22) am Endbereich entfernt ist, z.B. auf mechanischem Wege, beispielsweise durch spangebende Bearbeitung.

15. Wärmespeicher nach einem der Ansprüche 1 bis 14,
**dadurch gekennzeichnet**,
daß die Innenhülle (11,) insbesondere ein Sammelkasten (16) dieser, an den die Leitungen (14,15) angeschlossen sind, und/oder die Außenhülle (12) aus Aluminium gebildet sind.

## Claims

1. Heat accumulator, in particular a latent heat accumulator with an inner sleeve (11) containing an accumulator core, with an external sleeve (12) surrounding the inner sleeve (11) at a distance therefrom forming an insulating chamber (13) and with two lines (14, 15) guided from the outside through the insulation chamber (13), one of which serves as an inlet line and the other of which serves as a return line for a heat transporting medium, in which each line (14, 15) has a line section (17, 18) running through the insulating chamber (13) which is made of a material with reduced thermal conductivity,
**characterised in that**
the respective line section (17, 18) is formed from a metal with low thermal conductivity.

2. Heat accumulator according to claim 1,
**characterised in that**
the metal with low thermal conductivity is able to be welded or soldered.

3. Heat accumulator according to claim 1 or 2,
**characterised in that**
the metal is a high-grade steel, e.g. a rust-proof and acid-proof chrome-nickel alloyed steel.

4. Heat accumulator according to one of claims 1 to 3,
**characterised in that**
the respective line section (17, 18) at the end connecting with the inner sleeve (11) is provided with a connecting sleeve (19, 20) by means of which the line section (17, 18) is secured to the inner sleeve (11).

5. Heat accumulator according to one of claims 1 to 4,
**characterised in that**
the respective line section (17, 18) at the end leading out of the outer sleeve (12) is provided with a connecting sleeve (21, 22) by means of which the line section (17, 18) is secured to the outer sleeve (12).

6. Heat accumulator according to claim 4 or 5,
**characterised in that**
the respective connecting sleeve (19 to 22) is formed from aluminium.

7. Heat accumulator according to one of claims 4 to 6, in particular with a vacuum-insulated insulation chamber (13),
**characterised in that**
the respective connecting sleeve (19 to 22) is joined in a sealing manner, preferably vacuum-tight, to the respective line section (17, 18).

8. Heat accumulator according to one of claims 4 to 7, in particular with a vacuum-insulated insulation chamber (13),
**characterised in that**
the respective connecting sleeve (19, 20) is joined in a sealing manner, preferably vacuum-tight, to the inner sleeve (11).

9. Heat accumulator according to one of claims 4 to 8, in particular with a vacuum-insulated insulation chamber (13),
**characterised in that**
the respective connecting sleeve (21, 22) is joined in a sealing manner, preferably vacuum-tight, to the outer sleeve (12).

10. Heat accumulator according to claim 8 or 9,
**characterised in that**
the respective connecting sleeve (19 to 22) is joined to the inner sleeve (11) or the outer sleeve (12) by welding or soldering.

11. Heat accumulator according to one of claims 4 to 10,
**characterised in that**
the respective connecting sleeve (19 to 22) is secured by welding, e.g. diffusion welding, or soldering to the respective line section (17, 18).

12. Heat accumulator according to one of claims 1 to 10,
**characterised in that**
the respective line section (17, 18) is provided with the respective connecting sleeve (19 to 22) by a material coating, e.g. by spray coating.

13. Heat accumulator according to one of claims 4 to 10,
**characterised in that**
the respective connecting sleeve (19 to 22) is secured to the respective line section (17, 18) mechanically, e.g. by rolling in or the like.

14. Heat accumulator according to one of claims 1 to 10,
**characterised in that**
the respective line (14, 15) is formed from a double-walled pipe part the outer aluminium casing of which is partly removed leaving connecting sleeves (19 to 22) at the ends, e.g. in a mechanical way, for example by a metal-removing process.

15. Heat accumulator according to one of claims 1 to 14,
**characterised in that**
the inner sleeve (11), in particular a collecting box (16) thereof to which the lines (14, 15) are connected, and/or the outer sleeve (12) are made of aluminium.

## Revendications

1. Accumulateur thermique, en particulier accumulateur à chaleur latente, comprenant une gaine intérieure (11), qui contient un noyau d'accumulation, une gaine extérieure (12), qui enveloppe la gaine intérieure (11) à une distance déterminée en formant une chambre d'isolation (13), et deux conduites (14, 15), qui viennent de l'extérieur et traversent la chambre d'isolation (13), l'une forme la conduite d'admission et l'autre la conduite d'évacuation, dans lesquelles circule un agent caloporteur, chaque conduite (14, 15) présentant un tronçon de conduite (17, 18), traversant la chambre d'isolation (13) et réalisé dans un matériau à conductibilité thermique réduite,
caractérisé en ce que chaque tronçon de conduite (17, 18) est réalisé dans un métal présentant une faible conductibilité thermique.

2. Accumulateur thermique selon la revendication 1,
caractérisé en ce que le métal à faible conductibilité thermique peut être soudé ou brasé.

3. Accumulateur thermique selon la revendication 1 ou 2, caractérisé en ce que le métal utilisé est un acier fin et spécial, tel que l'acier allié au chrome et nickel inoxydable et résistant aux acides.

4. Accumulateur thermique selon l'une quelconque des revendications 1 à 3, caractérisé en ce que l'extrémité de chaque tronçon de conduite (17, 18) raccordé à la gaine intérieure (11) est munie d'un manchon de raccordement (19, 20), par lequel le tronçon de conduite (17, 18) est fixé contre la gaine intérieure (11).

5. Accumulateur thermique selon l'une quelconque des revendications 1 à 4, caractérisé en ce que l'extrémité de chaque tronçon de conduite (17, 18) qui sort par la gaine extérieure (12) est munie d'un manchon de raccordement (21, 22), par lequel le tronçon de conduite (17, 18) est fixé contre la gaine extérieure (12).

6. Accumulateur thermique selon la revendication 4 ou 5, caractérisé en ce que chaque manchon de raccordement (19 à 22) est réalisé en aluminium.

7. Accumulateur thermique selon l'une quelconque des revendications 4 à 6, comprenant en particulier une chambre d'isolation (13) isolée sous vide, caractérisé en ce que chaque manchon de raccordement (19 à 22) est raccordé au tronçon de conduite correspondant (17, 18) par un assemblage étanche, de préférence étanche au vide.

8. Accumulateur thermique selon l'une quelconque des revendications 4 à 7, comprenant en particulier une chambre d'isolation (13) isolée sous vide, caractérisé en ce que chaque manchon de raccordement (19, 20) est relié à la gaine intérieure (11) par un assemblage étanche, de préférence étanche au vide.

9. Accumulateur thermique selon l'une quelconque des revendications 4 à 8, comprenant en particulier une chambre d'isolation (13) isolée sous vide, caractérisé en ce que chaque manchon de raccordement (21, 22) est relié à la gaine extérieure (12) par un assemblage étanche, de préférence étanche au vide.

10. Accumulateur thermique selon la revendication 8 ou 9, caractérisé en ce que chaque manchon de raccordement (19 à 22) est assemblé par soudage ou par brasage contre la gaine intérieure (11) et contre la gaine extérieure (12).

11. Accumulateur thermique selon l'une quelconque des revendications 4 à 10, caractérisé en ce que chaque manchon de raccordement (19 à 22) est assemblé au tronçon de conduite correspondant (17, 18) par soudage, tel que le procédé de soudage par diffusion, ou par brasage

12. Accumulateur thermique selon l'une quelconque des revendications 1 à 10, caractérisé en ce que chaque tronçon de conduite (17, 18) est muni d'un manchon de raccordement (19 à 22), déposé par un procédé de rechargement de matière, telle que la métallisation à la flamme.

13. Accumulateur thermique selon l'une quelconque des revendications 4 à 10, caractérisé en ce que chaque manchon de raccordement (19 à 22) est fixé par un procédé d'assemblage mécanique sur le tronçon de concuite correspondant (17, 18), tel que le sertissage ou un procédé analogue.

14. Accumulateur thermique selon l'une quelconque des revendications 1 à 10, caractérisé en ce que chaque conduite (14, 15) est formée par un tube à double paroi, dont la chemise extérieure en aluminium est éliminée par un procédé mécanique, tel que l'usinage par enlèvement de copeaux, de manière à ne laisser que les manchons de raccordement (19 à 22) aux zones d'extrémité.

15. Accumulateur thermique selon l'une quelconque des revendications 1 à 14, caractérisé en ce que la gaine intérieure (11), en particulier la cuve collectrice (16) de cette dernière, à laquelle sont raccordées les conduites (14, 15), et/ou la gaine extérieure (12) sont réalisées en aluminium.
